# EUROPEAN PATENT APPLICATION

(11) **EP 4 538 833 A1**
(43) Date of publication of application: **16.04.2025**
(21) Application number: 24199740.2
(22) Date of filing: 11.09.2024
(51) Int. Cl.: G06F 3/01, G05B 19/418

(54) **MIXED REALITY DEVICE, PROCESSING METHOD, AND STORAGE MEDIUM**

(30) Priority: 11.10.2023 JP 2023176289
(71) Applicant: Kabushiki Kaisha Toshiba, Tokyo 105-0023 (JP)
(72) Inventor: HAYASHI, Kyotaro, Minato-ku, Tokyo, 105-0023 (JP); HIROSE, Yusuke, Minato-ku, Tokyo, 105-0023 (JP); YOSHII, Takanori, Minato-ku, Tokyo, 105-0023 (JP); HIRAHARA, Yoshiyuki, Minato-ku, Tokyo, 105-0023 (JP); FUKUDA, Masamitsu, Minato-ku, Tokyo, 105-0023 (JP); NAKAMURA, Hiroaki, Tokyo, 105-0023 (JP); KOZAKAI, Takafumi, Tokyo, 105-0023 (JP); NAMIOKA, Yasuo, Tokyo, 105-0023 (JP)
(74) Representative: Hoffmann Eitle

(57) **Abstract**

According to one embodiment, a mixed reality device (100) is configured to set an origin of a virtual space by using a marker (210) located in a real space. The mixed reality device is configured to display a virtual object (301~308) at a preset position in a three-dimensional coordinate system, the three-dimensional coordinate system being based on the origin. The mixed reality device is configured to acquire a movement amount of the marker with respect to a reference position of the marker, the reference position of the marker being acquired when the origin is set. The mixed reality device is configured to move the origin according to the movement amount when the movement amount is greater than a first threshold, the first threshold being preset.

## Description

### FIELD

Embodiments of the invention generally relate to a mixed reality device, a processing method, and a storage medium.

### BACKGROUND

Conventionally, a mixed reality device is used to perform a task efficiently. The mixed reality device can display a virtual space to overlap real space, and can provide various information to a worker. The worker can perform the task more efficiently by referring to the information displayed by the mixed reality device. Technology that can improve the convenience of the mixed reality device is desirable.

### BRIEF DESCRIPTION OF THE DRAWINGS

FIG. 1 is a schematic view illustrating a mixed reality device according to an embodiment;
FIG. 2 is a schematic view illustrating an article that is a task object;
FIG. 3 is a schematic view showing an output example of the mixed reality device according to the embodiment;
FIG. 4 is a schematic view showing an output example of the mixed reality device according to the embodiment;
FIG. 5 is a schematic view illustrating a task;
FIG. 6 is a schematic view showing an example of a tool;
FIG. 7 is a schematic view illustrating a task;
FIGS. 8A and 8B are schematic views for describing processing according to the mixed reality device according to the embodiment;
FIG. 9 is a schematic view for describing methods for calculating a movement amount;
FIG. 10 is a schematic view for describing the methods for calculating the movement amount;
FIG. 11 is a flowchart showing a processing method according to the embodiment;
FIG. 12 is a flowchart showing a correction method of the display position of a virtual object;
FIG. 13 is a flowchart showing a control method of the operation of the MR device;
FIG. 14 is a schematic view showing a display example of a mixed reality device according to a modification; and
FIG. 15 is a schematic view showing a hardware configuration.

### DETAILED DESCRIPTION

According to one embodiment, a mixed reality device is configured to set an origin of a virtual space by using a marker located in a real space. The mixed reality device is configured to display a virtual object at a preset position in a three-dimensional coordinate system, the three-dimensional coordinate system being based on the origin. The mixed reality device is configured to acquire a movement amount of the marker with respect to a reference position of the marker. The reference position of the marker is acquired when the origin is set. The mixed reality device is configured to move the origin according to the movement amount when the movement amount is greater than a first threshold, the first threshold being preset.

Embodiments of the invention will now be described with reference to the drawings. The drawings are schematic or conceptual; and the relationships between the thicknesses and widths of portions, the proportions of sizes between portions, etc., are not necessarily the same as the actual values thereof. The dimensions and/or the proportions may be illustrated differently between the drawings, even in the case where the same portion is illustrated. In the drawings and the specification of the application, components similar to those described thereinabove are marked with like reference numerals, and a detailed description is omitted as appropriate.

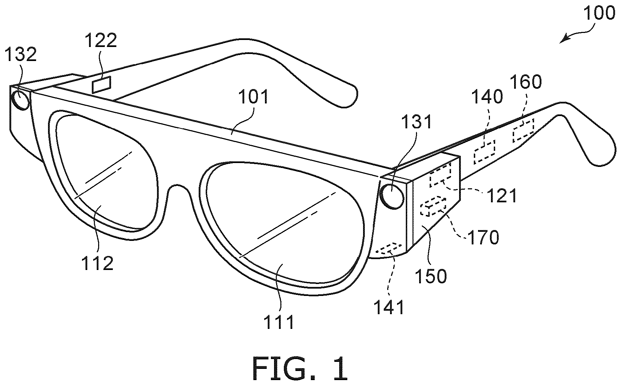

FIG. 1 is a schematic view illustrating a mixed reality device according to an embodiment.

The embodiment of the invention relates to a mixed reality device (a MR device). For example, as shown in FIG. 1, the MR device 100 according to the embodiment includes a frame 101, a lens 111, a lens 112, a projection device 121, a projection device 122, an image camera 131, a depth camera 132, a sensor 140, a microphone 141, a processing device 150, a battery 160, and a storage device 170.

In the illustrated example, the MR device 100 is a binocular head mounted display. Two lenses, i.e., the lens 111 and the lens 112, are fit into the frame 101. The projection device 121 and the projection device 122 respectively project information onto the lenses 111 and 112.

The projection device 121 and the projection device 122 display a recognition result of a body of a worker, a virtual object, etc., on the lenses 111 and 112. Only one of the projection device 121 or the projection device 122 may be included, and information may be displayed on only one of the lens 111 or the lens 112.

The lens 111 and the lens 112 are light-transmissive. The wearer of the MR device 100 can visually recognize real space via the lenses 111 and 112. The wearer of the MR device 100 also can visually recognize information projected onto the lenses 111 and 112 by the projection devices 121 and 122. The information (the virtual space) is displayed to overlap real space by being projected by the projection devices 121 and 122.

The image camera 131 detects visible light and obtains a two-dimensional image. The depth camera 132 irradiates infrared light and obtains a depth image based on the reflected infrared light. The sensor 140 is a six-axis detection sensor and is configured to detect angular velocities in three axes and accelerations in three axes. The microphone 141 accepts an audio input.

The processing device 150 controls components of the MR device 100. For example, the processing device 150 controls the display by the projection devices 121 and 122. The processing device 150 detects movement of the visual field based on a detection result of the sensor 140. The processing device 150 changes the display by the projection devices 121 and 122 according to the movement of the visual field. The processing device 150 also is configured to perform various processing by using data obtained from the image camera 131 and the depth camera 132, data of the storage device 170, etc.

The battery 160 supplies power necessary for the operations to the components of the MR device 100. The storage device 170 stores data necessary for the processing of the processing device 150, data obtained by the processing of the processing device 150, etc. The storage device 170 may be located outside the MR device 100, and may communicate with the processing device 150.

The MR device according to the embodiment is not limited to the illustrated example, and may be a monocular head mounted display. The MR device may be an eyeglasses-type as illustrated, or may be a helmet-type.

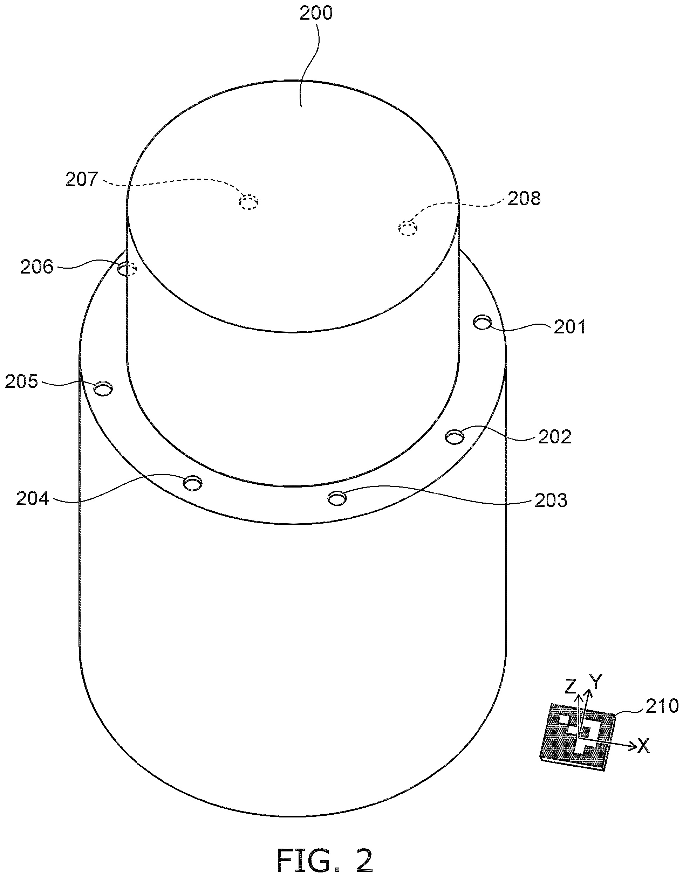

FIG. 2 is a schematic view illustrating an article that is a task object.

For example, the worker performs a task on an article 200 shown in FIG. 2 while wearing the MR device 100. The article 200 is a cylindrical member, and includes fastening locations 201 to 208. The worker uses a wrench and an extension bar to sequentially turn screws respectively at the fastening locations 201 to 208.

When the task is performed using the MR device 100, a three-dimensional coordinate system of a virtual space is set by using a prescribed object as a reference. In the example shown in FIG. 2, a marker 210 is located proximate to the task object. The marker 210 is an AR marker. As described below, the marker 210 is provided for setting the origin of the three-dimensional coordinate system. Instead of the AR marker, a one-dimensional code (a barcode), a two-dimensional code (a QR code (registered trademark)), etc., may be used as the marker 210.

When starting the task, the image camera 131 and the depth camera 132 image the marker 210. The processing device 150 recognizes the marker 210 based on the captured image. The processing device 150 sets the origin of the virtual space by using the position and orientation of the marker 210 as a reference. The three-dimensional coordinate system of the virtual space is defined by setting the origin. By setting the origin referenced to a prescribed object present in real space, virtual objects that correspond to objects in real space can be displayed.

The processing device 150 also calculates the position of the MR device 100. As an example, the processing device 150 uses a spatial mapping function to calculate the position and direction of the MR device 100. In the MR device 100, the depth camera 132 measures the distances to objects around the MR device 100. Surface information of objects in the surrounding area is obtained from the measurement result of the depth camera 132. The surface information includes the positions and directions of the surfaces of the objects. For example, the surface of each object is represented by multiple meshes; and the position and direction of each mesh are calculated. Based on the surface information, the processing device 150 calculates the relative position and direction of the MR device 100 with respect to the surfaces of the objects in the surrounding area. When the marker 210 is recognized, the positions of the surfaces also are represented using the three-dimensional coordinate system having the marker 210 as the origin. The position and direction of the MR device 100 in the three-dimensional coordinate system is calculated based on the positional relationship between the MR device 100 and the surfaces of the objects. The spatial mapping is repeatedly performed at a prescribed interval.

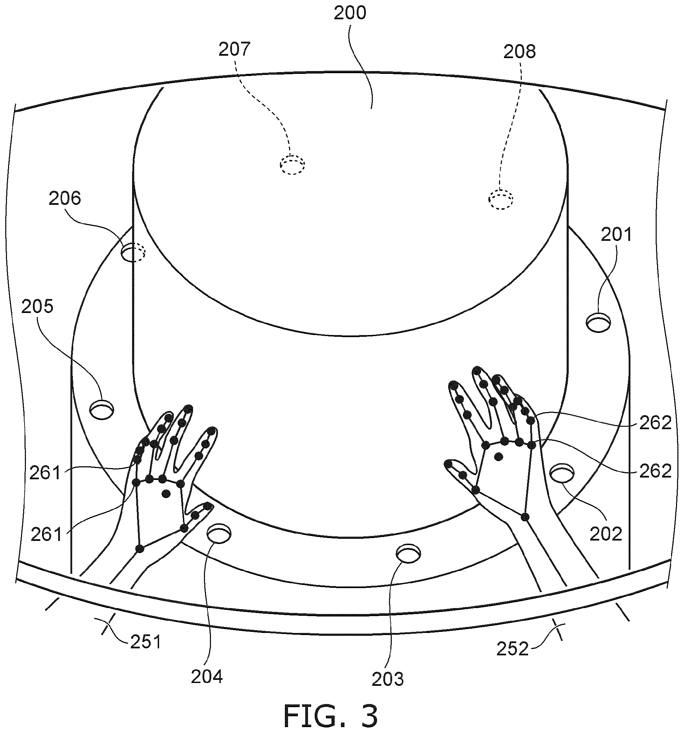

FIG. 3 is a schematic view showing an output example of the mixed reality device according to the embodiment.

In the task, the image camera 131 and the depth camera 132 image the article 200, a left hand 251 of the worker, and a right hand 252 of the worker. The processing device 150 uses hand tracking to recognize the left and right hands 251 and 252 based on the captured image. The processing device 150 may cause the projection devices 121 and 122 to display the recognition result on the lenses 111 and 112. Hereinafter, the processing device using the projection device to display information on the lens also is called simply "the processing device displaying information".

For example, as shown in FIG. 3, the processing device 150 displays the recognition result of the left hand 251 and the recognition result of the right hand 252 to overlap the hands in real space. In the illustrated example, multiple virtual objects 261 and multiple virtual objects 262 are displayed as the recognition results of the left and right hands 251 and 252. The multiple virtual objects 261 respectively indicate multiple joints of the left hand 251. The multiple virtual objects 262 respectively indicate multiple joints of the right hand 252. Instead of joints, virtual objects (meshes) that represent the surface shape of the left hand 251 and the surface shape of the right hand 252 may be displayed. The meshes are obtained by spatial mapping.

When the left hand 251 and the right hand 252 are recognized, the processing device 150 measures the positions of the hands. Specifically, each hand includes multiple joints such as a DIP joint, a PIP joint, an MP joint, a CM joint, etc. The position of any of these joints is used as the position of the hand. The centroid position of multiple joints may be used as the position of the hand. Or, the center position of the entire hand may be used as the position of the hand.

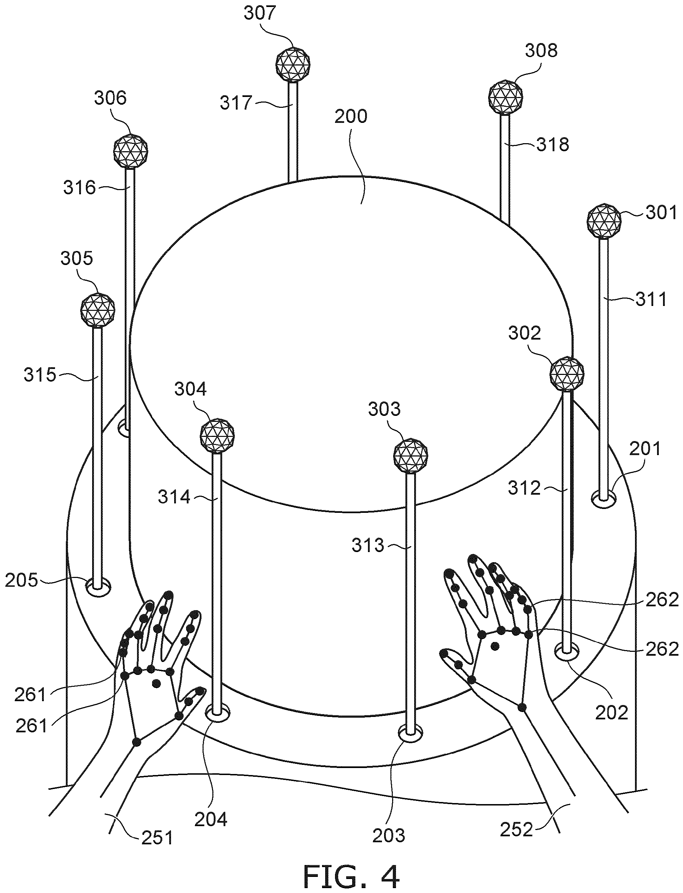

FIG. 4 is a schematic view showing an output example of the mixed reality device according to the embodiment.

As shown in FIG. 4, the processing device 150 displays virtual objects 301 to 308 and virtual objects 311 to 318. The virtual objects 311 to 318 are displayed at positions respectively separated from the fastening locations 201 to 205. The virtual objects 311 to 318 are displayed respectively between the fastening locations 201 to 205 and the virtual objects 301 to 308. The virtual objects 311 to 318 respectively show which of the fastening locations correspond to the virtual objects 301 to 308.

In the illustrated example, the virtual objects 301 to 308 are spherical, and the virtual objects 311 to 318 are rod-shaped. The shapes of the virtual objects are not limited to the example as long as the worker can visually recognize the virtual objects. For example, the virtual objects 301 to 308 may be cubic; and the virtual objects 311 to 318 may be wire-shaped. Virtual objects similar to the virtual objects 301 to 308 and the virtual objects 311 to 318 also are displayed for fastening locations 206 to 208 not shown in FIG. 4.

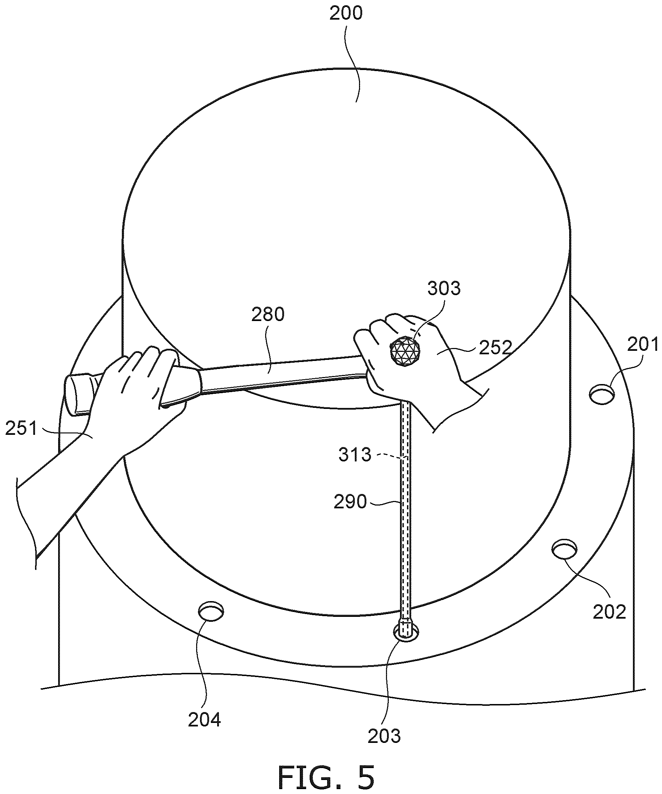

FIG. 5 is a schematic view illustrating a task.

For example, as shown in FIG. 5, a wrench 280 and an extension bar 290 are used to turn a screw at a fastening location. As an example, when tightening a screw at a fastening location 203, the worker places a screw in the screw hole of the fastening location 203. The worker causes one end of the extension bar 290 to engage the screw. The worker causes the head of the wrench 280 to engage the other end of the extension bar 290. The worker presses the head of the wrench 280 with one hand, and grips the grip of the wrench 280 with the other hand. By turning the wrench 280, the screw is tightened at the fastening location 203 via the extension bar 290.

At this time, the worker disposes the extension bar 290 so that the extension bar 290 approaches or contacts the virtual object 313. Also, the worker grips the head of the wrench 280 so that the hand contacts the virtual object 303. By displaying the virtual object, the worker can easily ascertain the positions at which the tool and the hand are to be located when turning the screw at the fastening location 203. The work efficiency can be increased thereby.

After the virtual object is displayed, the processing device 150 may determine whether or not a prescribed object contacts the virtual object. For example, the processing device 150 determines whether or not a hand contacts the virtual object 303. Specifically, the processing device 150 calculates the distance between the virtual object 303 and the position of the hand. When the distance is less than a preset threshold, the processing device 150 determines that the hand contacts the virtual object. As an example in FIG. 5, the diameter of the virtual object 303 (a sphere) corresponds to the threshold. The sphere is the range in which the hand is determined to contact the virtual object.

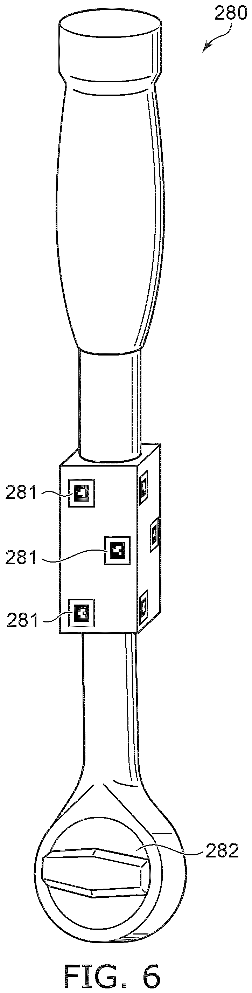

FIG. 6 is a schematic view showing an example of a tool.

The processing device 150 may determine whether or not the tool contacts the virtual object 303. For example, as shown in FIG. 6, multiple markers 281 are mounted to the wrench 280. The processing device 150 recognizes the multiple markers 281 based on an image that is imaged by the image camera 131. The processing device 150 measures the positions of the markers 281. The positional relationships between the multiple markers 281 and a head 282 of the wrench 280 are preregistered. The processing device 150 calculates the position of the head 282 based on the positions of at least three markers 281 that are recognized and the preregistered positional relationships. The processing device 150 calculates the distance between the virtual object 303 and the position of the head 282. When one of the distances is less than a preset threshold, the processing device 150 determines that the wrench 280 contacts the virtual object.

When the distance is less than the threshold, it can be estimated (inferred) that a screw is being turned at a fastening location corresponding to the one of the virtual objects 303. In the example shown in FIG. 5, due to the contact between the hand and the virtual object 303, it is estimated that the task is to be performed at the fastening location 203 corresponding to the virtual object 303.

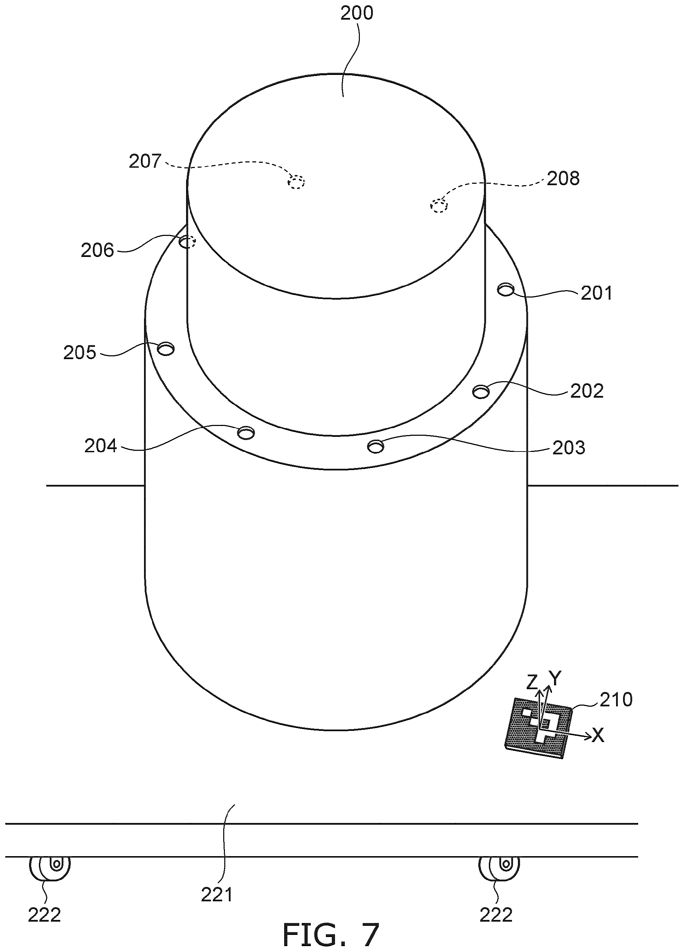

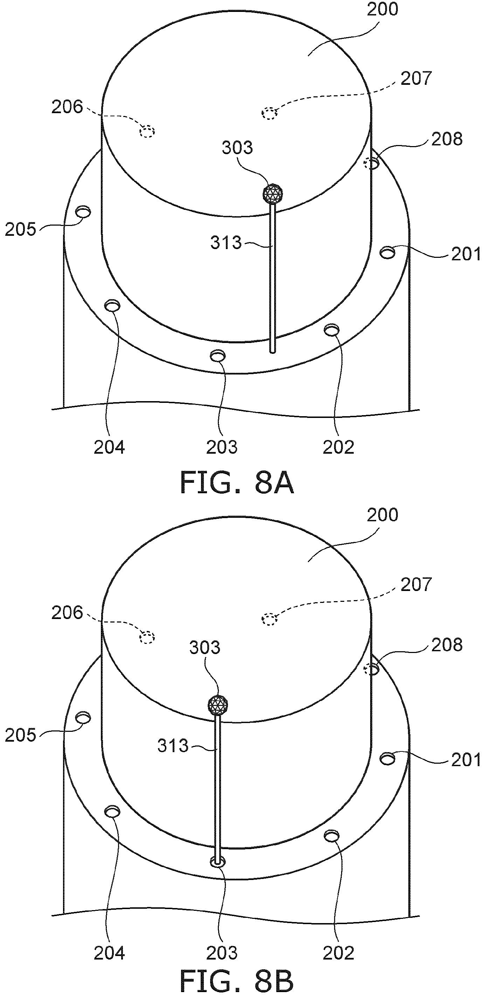

FIG. 7 is a schematic view illustrating a task. FIGS. 8A and 8B are schematic views for describing processing according to the mixed reality device according to the embodiment.

For example, as shown in FIG. 7, the article 200 is placed on a cart 221. At least one caster 222 is mounted to the lower surface of the cart 221. The cart 221 is movable with respect to the floor surface. For example, the marker 210 is mounted to the cart 221. The article 200 is placed so that the article 200 does not move with respect to the cart 221 during the task. Therefore, the positional relationship between the article 200 and the marker 210 is substantially fixed.

The virtual object is displayed at a preset position in the three-dimensional coordinate system based on the marker 210. In the example shown in FIG. 5, the position of the fastening location 203, the length of the extension bar 290, etc., are preregistered. The virtual object 313 is displayed between the position of the fastening location 203 and a position separated from the fastening location 203 by the length of the extension bar 290. The virtual object 303 is displayed at a position separated from the fastening location 203 by the length of the extension bar 290. As a result, the virtual objects 303 and 313 are displayed to correspond to the fastening location 203.

The worker can move the article 200 to easily perform the task. For example, the worker rotates the article 200 when performing the task so that the fastening location at which the screw is to be tightened is positioned proximate to the worker. At this time, if the article 200 is moved without updating the position of the origin, the display position of the virtual object is shifted from the position at which the virtual object should be displayed. As a result, as shown in FIG. 8A, the virtual objects 303 and 313 are displayed distant to the fastening location 203.

To appropriately display the virtual object, the processing device 150 acquires the movement amount of the article 200 when displaying the virtual object. Here, "movement" includes translational movement and rotational movement. "Movement amount" includes the amount of the translational movement and the amount of the rotational movement. When the movement amount is greater than a preset threshold, the processing device 150 moves the origin according to the movement amount. As a result, as shown in FIG. 8B, the display positions of the virtual objects 303 and 313 change. The virtual objects 303 and 313 are displayed at more appropriate positions.

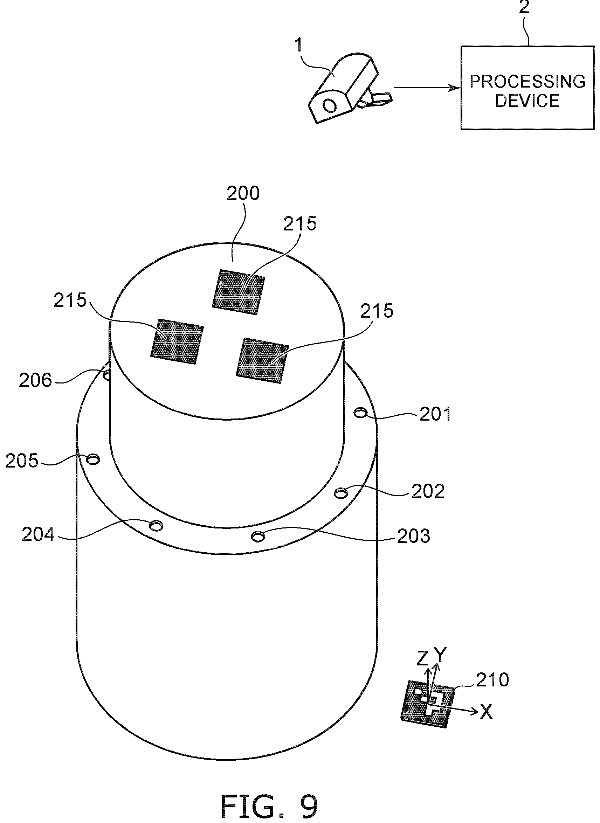

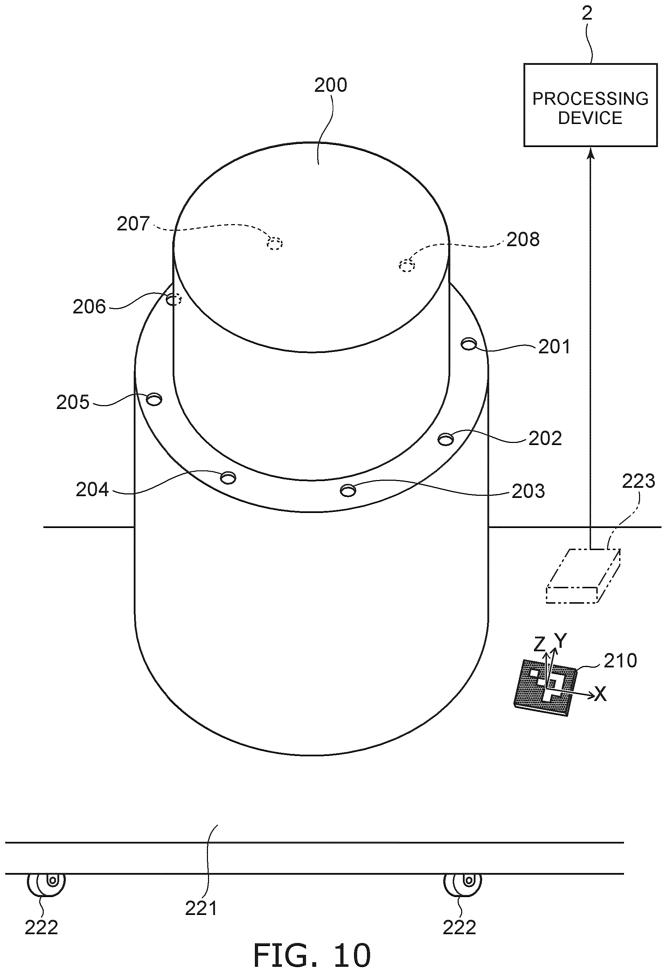

FIGS. 9 and 10 are schematic views for describing methods for calculating the movement amount.

One of the following first to fourth methods is used to calculate the movement amount.

In the first method as shown in FIG. 9, an imaging device 1 is mounted at a location at which the article 200 is located. The imaging device 1 images the article 200. A marker 215 is mounted to the article 200 at a position that is visible from the imaging device 1. The marker 215 is different from the marker 210. The marker 215 may be mounted to an object other than the article 200 as long as the position of the marker 215 is fixed with respect to the article 200. To increase the recognition accuracy of the marker 215, it is favorable for the marker 215 to have a color that is easily discriminated from the other objects. To increase the calculation accuracy of the movement amount, it is favorable for multiple markers 215 to be mounted.

The imaging device 1 acquires an image by imaging the marker 215. A processing device 2 recognizes the marker 215 based on the image and calculates the position of the marker 215 in the image. The processing device 2 stores, as a reference position, the position of the marker 215 at the timing that the processing device 150 sets the three-dimensional coordinate system. When the image is acquired, the processing device 2 calculates, as the movement amount, the difference between the reference position and the position of the recognized marker 215.

In the second method, the imaging device 1 images the article 200 similarly to the first method. The marker 215 is unnecessary. The processing device 2 recognizes the article 200 based on the image and calculates the position of the article 200 in the image. A pretrained model is used to recognize the article 200. To increase the accuracy of the recognition, it is favorable for the model to include a convolutional neural network (CNN). The processing device 2 stores, as a reference position, the position of the article 200 at the timing at which the processing device 150 sets the three-dimensional coordinate system. When the image is acquired, the processing device 2 calculates, as the movement amount, the difference between the reference position and the position of the recognized article 200.

In the third method, a sensor 223 is used to obtain the movement amount. The sensor 223 is mounted to the article 200 or the cart 221. The sensor 223 may be mounted to an object other than the article 200 or the cart 221 as long as the position of the sensor 223 is fixed with respect to the article 200. For example, the sensor 223 includes at least one selected from an acceleration sensor or an angular velocity sensor. The processing device 2 calculates the movement amount of the article 200 based on the acceleration or the angular velocity detected by the sensor 223. Or, the sensor 223 may include a receiver of a radio wave; and an indoor positioning system may be used to obtain the movement amount of the article 200. A beacon, radio frequency identification (RFID), an indoor messaging system (IMES), ultra-wide band (UWB) wireless communication, etc., are used for the indoor positioning.

In the fourth method, a spatial mapping function of the MR device 100 is utilized. In spatial mapping, the surface information of the objects in the surrounding area is calculated based on the depth image acquired by the depth camera 132. Changes of the positions of the surfaces are calculated by repeating the calculation of the surface information. The movement amount of the MR device 100 is calculated based on the detection result of the sensor 140. The difference between the movement amount the MR device 100 and the change of the positions of the surfaces of the article 200 corresponds to the actual movement amount of the article 200.

When the movement amount is calculated by one of the first to fourth methods, the processing device 150 acquires the movement amount. The processing device 150 compares the movement amount to a threshold. The threshold is preset according to the size of the virtual object, the allowable shift amount of the display position, etc. The movement amount is repeatedly calculated at a prescribed interval. It is favorable for the calculation interval to be short to reduce the period during which the virtual object is shifted with respect to the article 200 when the article 200 moves.

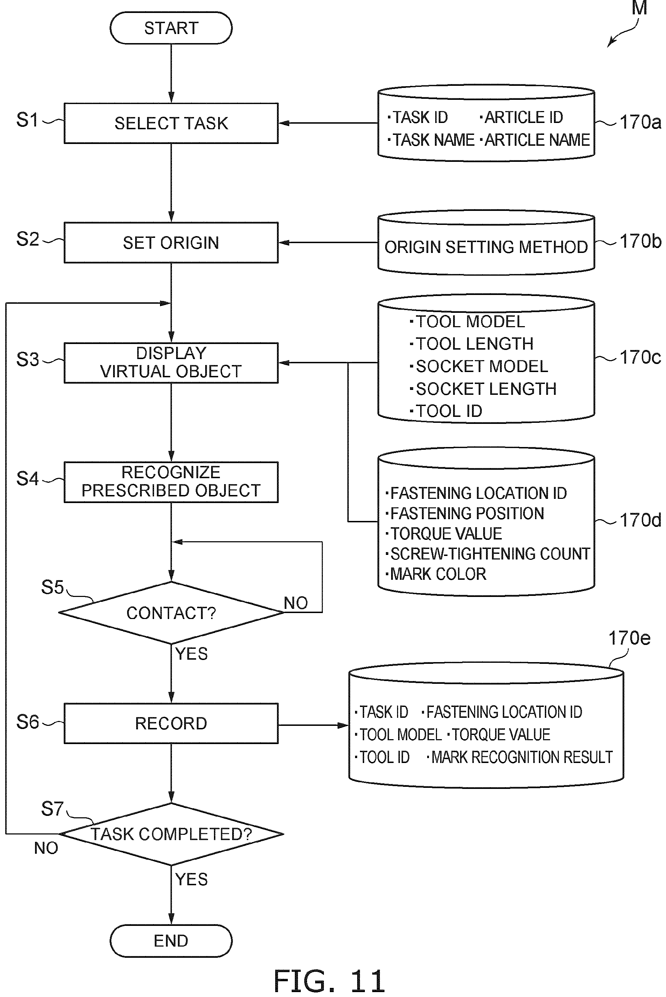

FIG. 11 is a flowchart showing a processing method according to the embodiment.

Before performing the processing method M shown in FIG. 11, task master data 170a, origin master data 170b, tool master data 170c, and fastening location master data 170d are prepared. Each set of master data is stored in the storage device 170.

First, the task to be performed is selected (step S1). The task ID, the task name, the article ID, and the article name are registered in the task master data 170a. The task is designated by the task ID, the task name, the ID of the article on which the task is performed, the name of the article, etc. The processing device 150 accepts the selection of the task. For example, the task to be performed is selected by the worker. The task to be performed may be selected by a higher-level system; and the processing device 150 may accept the selection. The processing device 150 may determine the task to be performed based on the data obtained from the image camera 131 or another sensor. The processing device 150 selects the task based on the determination result.

Then, the image camera 131 images the marker 210. The processing device 150 sets the origin of the three-dimensional coordinate system by using the position and orientation of the marker 210 as a reference (step S2). At this time, the processing device 150 refers to the origin master data 170b. The origin master data 170b stores the setting method of the origin for each task. The processing device 150 acquires the setting method of the origin for the selected task and sets the origin according to the setting method.

After setting the origin, the processing device 150 displays the virtual object (step S3). When displaying the virtual object, the data of the tool master data 170c and the fastening location master data 170d are referred to as appropriate.

The tool master data 170c stores the ID of the tool to be used, the model of the tool, the length of the tool, the model of the socket, the length of the socket, etc., for each task. The model of the tool indicates the classification of the tool by structure, exterior shape, performance, etc. The length of the tool is the length from the rotation center to the grip when the tool is used for screw-tightening. The model of the socket indicates the classification of the socket by structure or exterior shape. The length of the socket is the length of the socket in the direction connecting the tool and the screw when tightening the screw. The processing device 150 acquires, from the tool master data 170c, the data of the tool to be used in the task selected in step S1. When an extension bar is used, the model, length, etc., of the extension bar also are stored in the tool master data 170c. The processing device 150 also acquires the data related to the extension bar from the tool master data 170c.

The ID of the fastening location, the position of the fastening location, the necessary torque value, and the screw-tightening count for each fastening location are stored in the fastening location master data 170d. The fastening position is the position at which the fastening location is present, and is designated by the position of the three-dimensional coordinate system set in step S2. The screw-tightening count is the number of times that the screw must be tightened for each fastening location. When the screw is to be marked after fastening, the color of the mark also is registered.

The processing device 150 recognizes a prescribed object based on the image that is imaged by the image camera 131 (step S4). "Prescribed object" is an object determined to contact the virtual object. The processing device 150 calculates the position of the prescribed object and determines whether or not the distance between the object and the virtual object is less than a threshold (step S5). For example, the prescribed object contacts the virtual object when the distance is less than the threshold.

When the distance is not less than the threshold, step S4 is re-performed. When the distance is less than the threshold, the processing device 150 estimates that the task is being performed at the location corresponding to the virtual object.

The processing device 150 records the task related to the estimated location and stores the task in history data 170e (step S6). For example, a torque value detected by the tool is associated with the ID of the task and the ID of the estimated location. As illustrated, the processing device 150 also may associate the model and ID of the tool used, the screw-tightening count, and the recognition result of the mark with the ID of the fastening location. The mark is recognized by the processing device 150 based on the image that is imaged by the image camera 131. The processing device 150 extracts an aggregate of pixels of the mark color from the image and counts the number of pixels in the aggregate. When the number of pixels is greater than a preset threshold, a mark is determined to be present.

The processing device 150 determines whether or not the task is completed (step S7). When the task is incomplete, step S3 is re-performed.

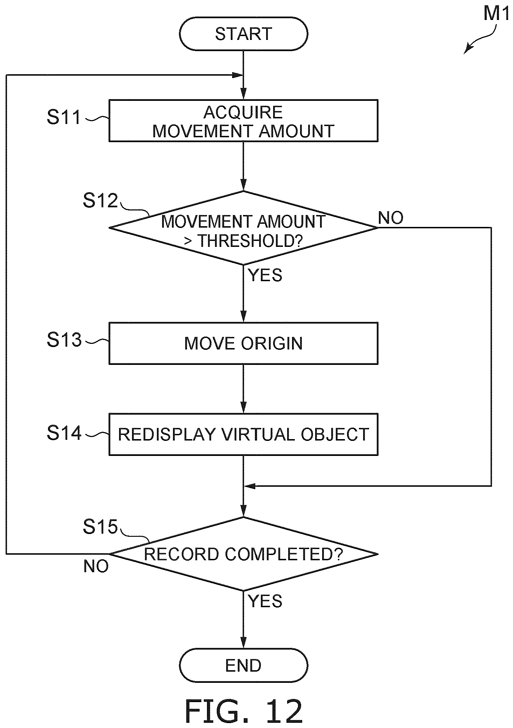

FIG. 12 is a flowchart showing a correction method of the display position of the virtual object.

The correction method M1 shown in FIG. 12 is performed after step S3 shown in FIG. 11. The correction method M1 is repeated until step S6 is performed.

First, the processing device 150 acquires the movement amount of the object for which the virtual object is displayed (step S11). The movement amount is calculated by one or more of the first to fourth methods described above. The processing device 150 determines whether or not the movement amount is greater than a threshold (step S12). When the movement amount is greater than the threshold, the processing device 150 moves the origin according to the movement amount (step S13). For example, the origin is translated the same amount as the translation of the article 200; and the origin is rotated the same amount as the rotation of the article 200. The processing device 150 redisplays the virtual object based on the origin after moving (step S14). When the movement amount is not more than the threshold in step S12 or after step S14 is performed, the processing device 150 determines whether or not step S6 shown in FIG. 11 is performed (step S15). When step S6 is not performed, step S11 is re-performed.

When the marker 210 is imaged after moving the origin, the origin is reset using the marker 210. The display position of the virtual object is set by using, as a reference, the origin that uses the marker 210. Therefore, by resetting the origin that uses the marker 210, the virtual object can be displayed at the most desirable position.

Advantages of the embodiment will now be described.

The MR device is effective in increasing the work efficiency. For example, by displaying the virtual object as shown in FIG. 5, the worker can easily ascertain which screw should be turned at which fastening location. Also, when turning the screw at the fastening location, the positions at which the tool and the hand are located can be intuitively ascertained. The work efficiency can be increased thereby. It is also possible to generate a task record based on the approach or contact between a prescribed object and a virtual object. By automatically generating the task record, it is unnecessary for the worker to generate a task record. The generation of an erroneous task record due to a mistake of the worker can be avoided.

These advantages are obtained by displaying the virtual object at a designated position corresponding to the article in real space. The display position of the virtual object in the three-dimensional coordinate system is preset. The origin of the three-dimensional coordinate system is set using the marker located in real space. Therefore, when the positional relationship between the marker recognized by the MR device 100 and the article in real space changes, the display position of the virtual object shifts with respect to the article in real space. As a result, the worker may become confused, or a task record may be generated for a location other than the actual location of task.

As an example, when the worker rotates the article 200 and the marker 210 from the state shown in FIG. 7, the marker 210 after rotating is not imaged (not recognized). In such a case, the positional relationship between the article 200 and the marker 210 that was recognized changes due to the rotation. As a result, as shown in FIG. 8A, the virtual objects 303 and 313 are displayed as being shifted from the fastening location 203.

For this problem, according to the embodiment of the invention, the processing device 150 moves the origin according to the movement amount. By moving the origin, the display of the virtual object shifted from the desired position can be suppressed. As a result, even when the article 200 is moved, the display positions of the virtual objects 303 and 313 can be moved according to the movement of the article 200 as shown in FIG. 8B. Because the virtual object is displayed at the appropriate position, the worker performs the task more easily. The task record can be generated more appropriately. According to the embodiment of the invention, the convenience of the MR device 100 can be improved.

Two or more of the first to fourth methods may be used to calculate the movement amount. For example, the first method and one of the third or fourth method is performed. In the first method, the necessary calculation amount is low, and the accuracy is good. Therefore, the movement amount that is calculated by the first method is given priority over movement amounts calculated by other methods. On the other hand, when the marker 215 is concealed by another object, the calculation amount cannot be obtained by the first method. In such a case, the movement amount that is calculated by the third or fourth method is used.

There is also a method of suppressing the shift between the virtual object and the article by recognizing the article and details (fastening locations, etc.) of the article based on images. In such a case, the virtual object can be displayed to match the recognized details. Accordingly, even when the worker moves the article, the article after moving is recognized, and the virtual object is displayed. However, a large calculation amount is necessary to accurately recognize the article and its details based on the image. More time is necessary from the worker moving the article until the virtual object is displayed at the desired position.

According to the embodiment, a marker is used to set the origin; and the virtual object is displayed at the prescribed position. According to this method, the necessary calculation amount can be suppressed. The necessary calculation amount can be further suppressed by calculating the movement amount by using the image of the marker 215, the detection result of the sensor 223, etc. According to the embodiment of the invention, the calculation amount can be reduced, and the display position of the virtual object can be updated at a shorter interval. For example, the display position of the virtual object can be updated in real time according to the movement of the article.

### Modification

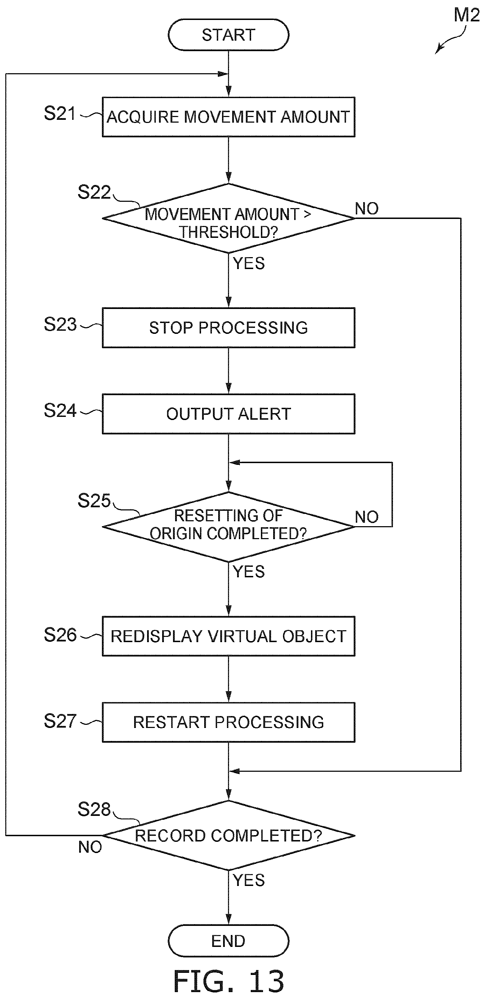

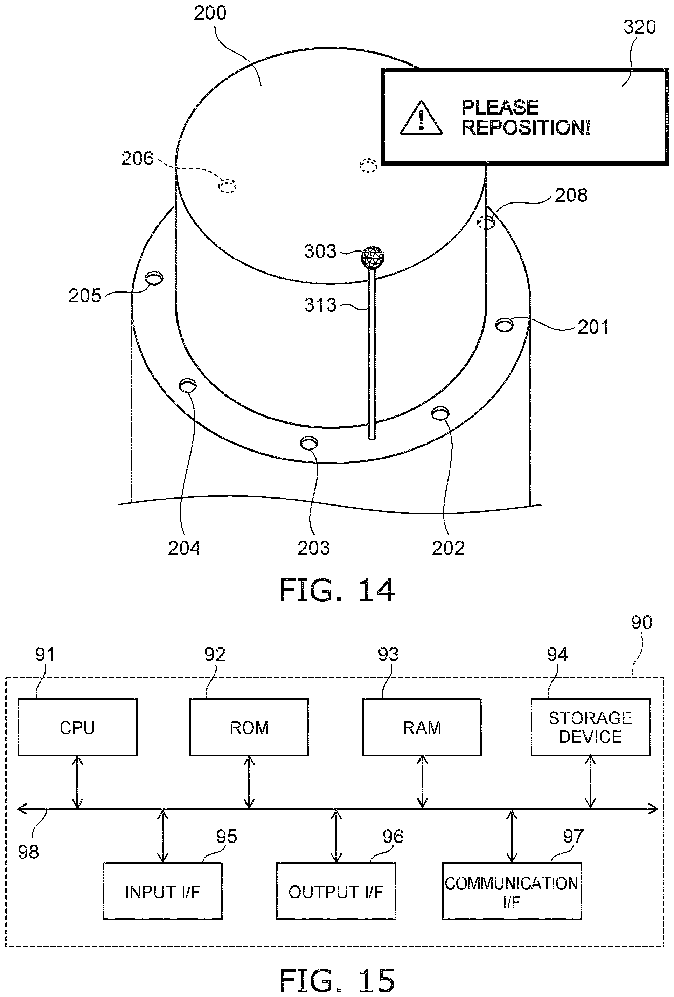

FIG. 13 is a flowchart showing a control method of the operation of the MR device. FIG. 14 is a schematic view showing a display example of a mixed reality device according to a modification.

The control method M2 shown in FIG. 13 may be performed instead of the correction method M1 shown in FIG. 12. In steps S21 and S22 of the control method M2, the movement amount is acquired and compared with the threshold similarly to steps S11 and S12 of the correction method M1. When the movement amount is greater than the threshold, the processing device 150 stops the processing of the processing method M shown in FIG. 11 (step S23). As a result, it is no longer determined that the prescribed object and the virtual object are in contact. The processing device 150 may stop the display of the virtual object. As a result, the generation of the task record also is stopped.

The processing device 150 outputs an alert (step S24). For example, as shown in FIG. 14, a message 320 is displayed for the worker to re-determine the display position of the virtual object. When the message 320 is displayed, the worker faces the marker 210. The image camera 131 images the marker 210; and the origin is reset based on the marker 210. Other than the message 320, a sound, a vibration, light, etc., may be output as the alert.

The processing device 150 determines whether or not the origin is reset (step S25). When the origin is reset, the processing device 150 redisplays the virtual object based on the reset origin (step S26). The processing device 150 restarts the processing method M (step S27). As a result, the prescribed object and the virtual object are determined to be in contact. As a result, the task record also is automatically generated.

When the movement amount is not more than the threshold in step S22 or after step S27, the processing device 150 determines whether or not step S6 shown in FIG. 11 is performed (step S28). When step S6 is not performed, step S21 is re-performed.

According to the modification of the embodiment, the processing of the processing method M shown in FIG. 11 is stopped when the movement amount is greater than the threshold. As a result, the prescribed object and the virtual object are not determined to be in contact, and the estimation of the fastening location of the task is stopped. The generation of the task record also is stopped. As a result, an erroneous estimation that the task is being performed at another fastening location can be prevented.

According to the modification, the generation of an erroneous task record due to the movement of the article 200 can be avoided. Therefore, the convenience of the MR device 100 can be improved.

When the processing is stopped, it is favorable for the processing device 150 to output an alert to promote the worker to reset the origin. By resetting the origin more quickly, the task is restarted more quickly. Therefore, a reduction of the work efficiency can be suppressed.

Herein, examples are mainly described in which the embodiment of the invention is applied to a task of tightening a screw. The embodiment of the invention is applicable to a task of loosening a screw. Even when loosening a screw, the screw is turned by using the tool as shown in FIG. 5. In such a case as well, the task can be efficiently performed by displaying the virtual object.

The embodiment of the invention is applicable to a task other than turning a screw. For example, the task may be the assembly of an article, the dismantling of an article, the transport of an article, etc. In any of the tasks, the task can be efficiently performed because the virtual object is displayed. When the article on which the task is to be performed is moved, the convenience of the MR device can be improved by changing the display position of the virtual object according to the movement amount or by stopping the estimation of the location at which the task is to be performed.

FIG. 15 is a schematic view showing a hardware configuration.

For example, a computer 90 shown in FIG. 15 is used as each of the processing devices 2 and 150. The computer 90 includes a CPU 91, ROM 92, RAM 93, a storage device 94, an input interface 95, an output interface 96, and a communication interface 97.

The ROM 92 stores programs controlling operations of the computer 90. The ROM 92 stores programs necessary for causing the computer 90 to realize the processing described above. The RAM 93 functions as a memory region into which the programs stored in the ROM 92 are loaded.

The CPU 91 includes a processing circuit. The CPU 91 uses the RAM 93 as work memory and executes the programs stored in at least one of the ROM 92 or the storage device 94. When executing the programs, the CPU 91 executes various processing by controlling configurations via a system bus 98.

The storage device 94 stores data necessary for executing the programs and/or data obtained by executing the programs. The storage device 94 includes a solid state drive (SSD), etc.

The input interface (I/F) 95 can connect the computer 90 with an input device. The CPU 91 can read various data from the input device via the input I/F 95.

The output interface (I/F) 96 can connect the computer 90 and an output device. The CPU 91 can transmit data to the output device via the output I/F 96 and can cause the output device to output information.

The communication interface (I/F) 97 can connect the computer 90 and a device outside the computer 90. For example, the communication I/F 97 connects a digital tool and the computer 90 by Bluetooth (registered trademark) communication.

The data processing performed by each of the processing devices 2 and 150 may be performed by only one computer 90. A part of the data processing may be performed by a server or the like via the communication I/F 97. The processing of the processing device 2 may be performed by the processing device 150. In the example above, a part of the processing performed by the processing device 150 may be performed by the processing device 2.

Processing of various types of data described above may be recorded, as a program that can be executed by a computer, on a magnetic disk (examples of which include a flexible disk and a hard disk), an optical disk (examples of which include a CD-ROM, a CD-R, a CD-RW, a DVD-ROM, a DVD±R, and DVD±RW), a semiconductor memory, or another non-transitory computer-readable storage medium.

For example, information recorded on a recording medium can be read by a computer (or an embedded system). The recording medium can have any record format (storage format). For example, the computer reads a program from the recording medium and causes the CPU to execute instructions described in the program, on the basis of the program. The computer may obtain (or read) the program through a network.

Embodiments of the invention include the following features.

### Feature 1

A mixed reality device, configured to:
set an origin of a virtual space by using a marker located in a real space;
display a virtual object at a preset position in a three-dimensional coordinate system, the three-dimensional coordinate system being based on the origin;
acquire a movement amount of the marker with respect to a reference position of the marker, the reference position of the marker being acquired when the origin is set; and
move the origin according to the movement amount when the movement amount is greater than a first threshold, the first threshold being preset.

### Feature 2

The device according to feature 1, further configured to:
recognize the marker based on an image of the marker,
the origin being set by using a position and an orientation of the marker as a reference.

### Feature 3

The device according to feature 2, further configured to:
reset the origin when the marker is reimaged after the moving of the origin,
the resetting being performed by using a position and an orientation of the marker recognized based on an image captured by the reimaging as a reference.

### Feature 4

The device according to any one of features 1 to 3, further configured to:
repeatedly acquire the movement amount; and
determine whether or not the movement amount is greater than the first threshold each time the movement amount is acquired.

### Feature 5

The device according to any one of features 1 to 4, further configured to:
calculate the movement amount by using an image of an article on which a task is performed, or by using a detection result from a sensor fixed with respect to the article.

### Feature 6

The device according to any one of features 1 to 5, in which
the virtual object is displayed to correspond to a fastening location of an article on which a task is performed.

### Feature 7

The device according to feature 6, further configured to:
calculate a distance between a prescribed object and the virtual object; and
when the distance is less than a second threshold, estimate that the task is being performed at the fastening location, the second threshold being preset.

### Feature 8

A mixed reality device, configured to:
set an origin of a virtual space by using a marker located in a real space;
display a virtual object to correspond to a fastening location of an article;
estimate that a task is being performed at the fastening location when a distance between a prescribed object and the virtual object is less than a second threshold, the second threshold being preset; and
stop the estimation of the fastening location at which the task is being performed when a movement amount of the marker with respect to a reference position of the marker is greater than a first threshold, the reference position of the marker being acquired when the origin is set, the first threshold being preset.

### Feature 9

The device according to feature 8, further configured to:
restart the estimation of the fastening location at which the task is being performed when the origin is reset after the stop of the estimation.

### Feature 10

The device according to feature 8 or 9, further configured to:
repeatedly acquire the movement amount; and
determine whether or not the movement amount is greater than the first threshold each time the movement amount is acquired.

### Feature 11

A processing method, including:
causing a mixed reality device to
set an origin of a virtual space by using a marker located in a real space,
display a virtual object at a preset position in a three-dimensional coordinate system, the three-dimensional coordinate system being based on the origin,
acquire a movement amount of the marker with respect to a reference position of the marker, the reference position of the marker being acquired when the origin is set, and
move the origin according to the movement amount when the movement amount is greater than a first threshold, the first threshold being preset.

### Feature 12

A program, when executed by the mixed reality device according to feature 11, causing the mixed reality device to perform the processing method according to feature 11.

### Feature 13

A storage medium configured to store the program according to feature 12.

According to the embodiments above, a mixed reality device that has better convenience is provided. Also, a processing method, a program, and a storage medium are provided in which the convenience of the mixed reality device can be further improved.

In the specification, "or" shows that "at least one" of items listed in the sentence can be adopted.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention. Moreover, above-mentioned embodiments can be combined mutually and can be carried out.

## Claims

1. A mixed reality device (100), configured to:
set an origin of a virtual space by using a marker (210) located in a real space;
display a virtual object (301~308) at a preset position in a three-dimensional coordinate system, the three-dimensional coordinate system being based on the origin;
acquire a movement amount of the marker with respect to a reference position of the marker, the reference position of the marker being acquired when the origin is set; and
move the origin according to the movement amount when the movement amount is greater than a first threshold, the first threshold being preset.

2. The device (100) according to claim 1, further configured to:
recognize the marker (210) based on an image of the marker,
the origin being set by using a position and an orientation of the marker as a reference.

3. The device (100) according to claim 2, further configured to:
reset the origin when the marker (210) is reimaged after the moving of the origin,
the resetting being performed by using a position and an orientation of the marker recognized based on an image captured by the reimaging as a reference.

4. The device (100) according to any one of claims 1 to 3, further configured to:
repeatedly acquire the movement amount; and
determine whether or not the movement amount is greater than the first threshold each time the movement amount is acquired.

5. The device (100) according to any one of claims 1 to 4, further configured to:
calculate the movement amount by using an image of an article (200) on which a task is performed, or by using a detection result from a sensor fixed with respect to the article.

6. The device (100) according to any one of claims 1 to 5, wherein
the virtual object (301~308) is displayed to correspond to a fastening location of an article (200) on which a task is performed.

7. The device (100) according to claim 6, further configured to:
calculate a distance between a prescribed object and the virtual object (301-308); and
when the distance is less than a second threshold, estimate that the task is being performed at the fastening location (201~208), the second threshold being preset.

8. A mixed reality device (100), configured to:
set an origin of a virtual space by using a marker (210) located in a real space;
display a virtual object (301~308) to correspond to a fastening location (201~208) of an article (200);
estimate that a task is being performed at the fastening location when a distance between a prescribed object and the virtual object is less than a second threshold, the second threshold being preset; and
stop the estimation of the fastening location at which the task is being performed when a movement amount of the marker with respect to a reference position of the marker is greater than a first threshold, the reference position of the marker being acquired when the origin is set, the first threshold being preset.

9. The device (100) according to claim 8, further configured to:
restart the estimation of the fastening location (201~208) at which the task is being performed when the origin is reset after the stop of the estimation.

10. The device (100) according to claim 8 or 9, further configured to:
repeatedly acquire the movement amount; and
determine whether or not the movement amount is greater than the first threshold each time the movement amount is acquired.

11. A processing method, comprising:
causing a mixed reality device (100) to
set an origin of a virtual space by using a marker (210) located in a real space,
display a virtual object (301~308) at a preset position in a three-dimensional coordinate system, the three-dimensional coordinate system being based on the origin,
acquire a movement amount of the marker with respect to a reference position of the marker, the reference position of the marker being acquired when the origin is set, and
move the origin according to the movement amount when the movement amount is greater than a first threshold, the first threshold being preset.

12. A storage medium configured to store a program,
the program causing a mixed reality device (100) to perform the processing method according to claim 11.
